# FASCICULE DE BREVET EUROPEEN

(11) **EP 0 851 325 B1**
(45) Date de publication et mention de la délivrance du brevet: **07.05.2003**
(21) Numéro de dépôt: 97402954.8
(22) Date de dépôt: 05.12.1997
(51) Int. Cl.: G05B 13/02

(54) **Procédé de régulation du chauffage d'un four mettant en oeuvre la technique de la logique floue**
Verfahren zur Regelung der Heizung eines Ofens mit Hilfe von unscharfer Logik
Method for controlling the heating of a furnace using fuzzy logic techniques

(30) Priorité: 23.12.1996 FR 9615896
(43) Date de publication de la demande: 01.07.1998
(73) Titulaire: STEIN HEURTEY, F-91130 Ris Orangis (FR)
(72) Inventeur: Borysowicz-Piliszczuk, Alicja, 91000 Evry (FR)
(74) Mandataire: Armengaud Ainé, Alain

(56) Documents cités:
- EP-A- 0 435 339
- EP-A- 0 554 479
- FR-A- 2 708 589
- US-A- 4 594 089
- US-A- 5 205 979
- US-A- 5 251 124
- US-A- 5 272 621
- R.ORNEDO ET AL: "DESIGNAND EXPERIMENTAL EVALUATION OF AN AUTOMATICALLY RECONFIGURABLE CONTROLLER FOR PROCESS PLANTS" PROCEEDINGS OF THE 1987 AMERICAN CONTROL CONFERENCE, vol. 3, 10 juin 1987, USA, pages 1662-1668, XP002037990
- S.SHERIDAN ET AL: "AUTOMATIC KILN CONTROL AT OREGON PORTLAND CEMENT COMPANYS DURKEE PLANT UTILIZING FUZZY LOGIC" THE TWENTY-FIFTH IEEE CEMENT INDUSTRY TECHNICAL CONFERENCE, mai 1983, USA, pages 1-18, XP002037991
- PREUSS H P ET AL: "FUZZY CONTROL- WERKZEUGUNTERSTUETZTE FUNKTIONSBAUSTEIN-REALISIERUNG FUR AUTOMATISIERUNGSGERAETE UND PROZESSLEITSYSTEME" AUTOMATISIERUNGSTECHNISCHE PRAXIS - ATP, vol. 34, no. 8, 1 août 1992, pages 451-460, XP000296610
- C. Ling, T.F. Edgar, "A new fuzzy gain schefuling algorithm for process control", Proceedings of the American Control Conference, US, New York, IEEE, 24 Jun. 1992, pages 2284-2290, XP 000343721
- R.P. Copeland, K.S. Rattan, "A Fuzzy Logic Supervisor for PID Cotrol of Unknown Systems", Proceedings of the International Symposium on Intelligent Control, US, New York, IEEE, 16 Aug. 1994, pages 22-26, XP000549547
- Z-Y. Zhao, M. Tomizuka, s. Isaka, "Fuzzy Gain Scheduling of PID Controllers", IEEE Conference on Control Applications, 1992, pages 698-703, XP 000863745
- PATENT ABSTRACTS OF JAPAN vol. 009, no. 327 (P-415) 21 Décembre 1985 & JP 60 151 709 A (KAWASAKI SEITETSU KK) 09 Août 1985
- DATABASE WPI Week 198538, Derwent Publications Ltd., London, GB; Class M24, AN 1985-233300 & JP 60 151 709 A (KAWASAKI STEEL CORP) 09 Août 1985

## Description

La présente invention concerne un système de régulation du chauffage d'un four, faisant appel à la technique de la logique floue.

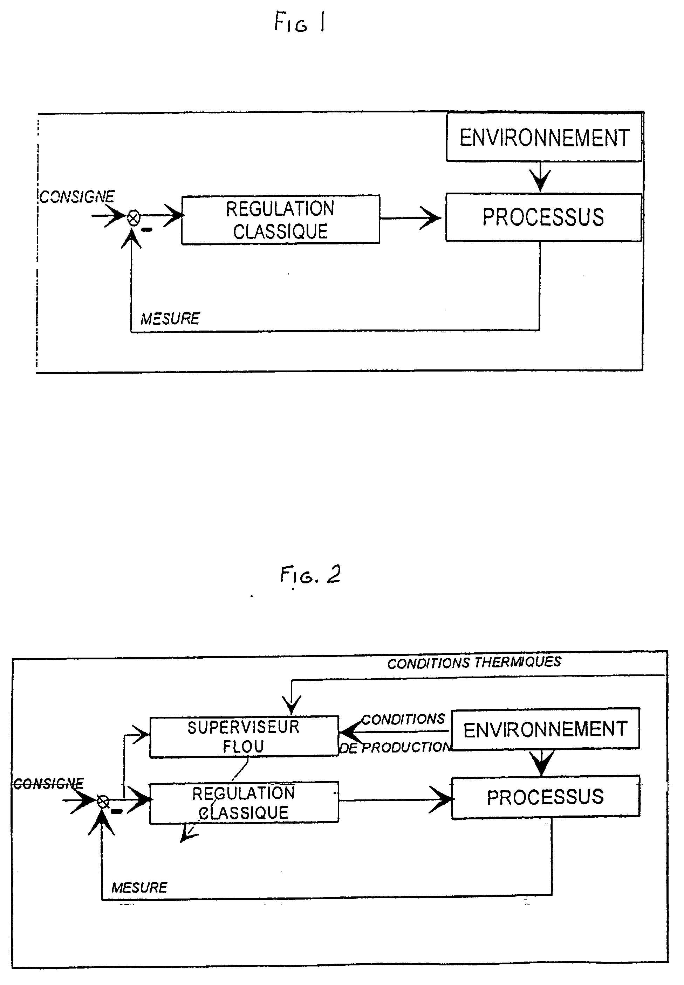

Dans les fours de sidérurgie et de l'industrie du verre, les débits de combustible dans les zones chauffées sont établis et ajustés dans les boucles de régulation du chauffage. Le schéma par blocs du contrôle du chauffage d'une zone est représenté sur la figure 1 des dessins annexés. Cette figure concerne un système de régulation tout à fait classique et de ce fait, elle ne sera pas commentée.

Les performances du dispositif de régulation, ou contrôleur dépendent du bon choix et du bon ajustement de ses paramètres internes. La solution la plus classique consiste à obtenir un jeu des paramètres figés du régulateur. Pour cela, il faut disposer d'un modèle mathématique du processus (une fonction de transfert) et ensuite appliquer des formules qui relient les paramètres du régulateur. Il faut garder à l'esprit que ces formules fournissent toujours un compromis entre la qualité de la réponse transitoire et le régime stable. De plus, un régulateur classique ayant des paramètres issus de ces formules n'est adapté qu'aux processus qui peuvent être décrits par des équations simples.

En réalité, ce n'est pas le cas du processus de chauffage des fours qui est très complexe et ne peut pas être modélisé par une fonction simple.

De plus, un tel processus subit, au cours du temps, des modifications ou des perturbations diverses parmi lesquelles on peut citer notamment :
- des arrêts et redémarrages de production qui génèrent des étapes transitoires,
- des variations de production, c'est-à-dire que des produits de différents types, dimensions et masses entrent dans le four séquentiellement. Ceci implique en permanence des changements des demandes caloriques;
- des variations de cadence de passage des produits dans le four.

En conséquence le régulateur avec des paramètres figés, même s'il est « le mieux » réglé possible n'arrivera jamais à dépasser une certaine limite de complexité et d'incertitude du processus.

Pour ces raisons, on a été conduit à étudier une régulation dont les paramètres ne sont plus constants mais peuvent s'adapter suivant la situation donnée de fonctionnement.

Dans le cadre des systèmes classiques de régulation automatique, on a vu ainsi apparaître l'idée d'un régulateur auto-adaptatif. L'idée directrice d'un tel type de régulateur est d'ajuster les coefficients du contrôleur en ligne dans le but d'adapter l'action de régulation aux conditions de fonctionnement. Mais cette idée est toujours basée sur les mêmes principes que dans le cas d'un régulateur non-adaptatif, c'est-à-dire sur un modèle mathématique du processus forcément simplifié, toujours figé dont seules les valeurs des paramètres sont ajustées en ligne. L'ajustement instantané du régulateur revient toujours à appliquer des formules d'adaptation classiques, simples qui sont basées sur un compromis de réponse.

Dans cette approche, on n'optimise donc toujours pas l'ajustement des paramètres issus des formules d'adaptation classiques. De plus, comme le modèle, même si on admet que ses paramètres évoluent, doit être simple et ne peut pas intégrer des changements instantanés de structure provoqués par des modifications et des pertubations dans le déroulement du processus à contrôler et à réguler, le modèle peut momentanément ne pas décrire correctement le système, ce qui entraîne une dégradation importante de la régulation.

On a vu apparaître par ailleurs, avec succès, de nouvelles techniques de commande, adaptées aux processus difficilement modélisables, telles que la logique floue.

Un contrôleur mettant en oeuvre la technique de la logique floue ou contrôleur flou est basé sur un modèle logique qui représente la stratégie qui serait mise en oeuvre par un opérateur si celui-ci devait contrôler manuellement le système. Les stratégies intuitives de contrôle peuvent être approchées par des algorithmes flous qui fournissent une méthode pour traiter des informations qualitatives de manière rigoureuse.

Il existe déjà plusieurs contrôleurs flous disponibles sur le marché. Même s'ils appliquent le raisonnement flou au lieu de se baser sur un modèle mathématique, ils présentent un gros inconvénient : ce sont des contrôleurs standards, donc non optimaux pour un système spécifique. Ils possèdent une base de règles standard et figée, donc non établie suivant des observations du comportement du processus donné. En effet, la régulation se base sur le contrôle de l'écart consigne-mesure de température, en augmentant l'action proportionnellement à l'écart. Un tel mode de régulation n'est pas du tout adapté aux systèmes à inertie importante, ce qui est le cas notamment d'un four.

En utilisant les régulateurs flous standards on perd deux grands avantages de la technique de la régulation floue :
- on ne peut pas choisir les entrées du contrôleur, dont il est impossible de prendre en compte des paramètres qui paraissent utiles à l'application déterminée et qui influencent le processus. Les entrées du contrôleur flou sont des variables standards, telles que erreur et dérivation d'erreur ;
- on ne peut pas adapter les règles suivant la connaissance du processus, de son comportement, extraites à partir d'observations et d'expériences, car la base de règles est aussi standard et figée.

On en revient au même problème : on dispose d'une solution standard donc fournissant toujours un certain compromis et en conséquence, cette solution n'est pas optimale et ne convient pas toujours à une situation donnée.

US-A-5 272 621 décrit un procédé de régularisation de la température d'un four de fusion de verre mettant en oeuvre la technique de la logique floue en détectant l'état du processus et en choisissant l'algorithme de contrôle en fonction de l'état détecté.

US-A-5 205 979 décrit un four pour la fusion du cuivre comportant un système de régulation mettant également en oeuvre la technique de la logique floue, les entrées/sorties du système flou étant typiques du procédé, par exemple l'inclinaison du four.

Les publications :
- C. Ling, T.F. Edgar, « A new fuzzy gain scheduling algorithme for process control" , Proceedings of the American Control Conference, US, New York, IEEE, 24 Juin 1992, pages 2284-2290, XP000343721 et
- Preuss H.P. et al : "Fuzzy control-werkzeugunterstützte funktionsbaustein-realisierung für automatisierungsgeräte und prozessleitsysteme" Automatisierungstechnische Praxis-ATP, vol. 34, n° 8, 1er août 1992, pages 451-460, XP000296610,
   décrivent des exemples de réalisations de systèmes de régulation combinant un régulateur PID (contrôle proportionnel/intégral/différentiel) et un superviseur flou.

Partant de cet état de la technique et en ayant pour objectif de résoudre les problèmes décrits ci-dessus, l'invention apporte un procédé de régulation du chauffage d'un four selon lequel un moyen classique de régulation proportionnel, intégratif, dérivatif est doté d'un superviseur flou qui, en fonction de la situation donnée et des informations qu'il reçoit sur ses entrées, adapte les paramètres du régulateur, ce procédé comportant les étapes suivantes :
- détection de l'état du processus à contrôler et à réguler comprenant une détection de régime transitoire ou de régime stable, suivant l'écart entre la température de consigne et la température mesurée de la paroi du four ;
- choix d'un des deux algorithmes de contrôle, respectivement stabilisé et transitoire en fonction de l'état du processus ainsi détecté, à l'aide d'une bascule basée sur le principe de la logique floue, en assurant un passage doux entre les états, sans discontinuité de contrôle ;
- calcul des paramètres (Kps, Kis, Kds, δKps, δKis, δKds ; Kpt, Kit, Kdt, δKpt, δKit, δKdt) du régulateur en fonction des besoins spécifiques, ce procédé étant caractérisé en ce que le calcul des paramètres tient compte :
- du taux de production et cadence de production, c'est-à-dire de la masse des produits traités dans le four et de la vitesse de production ;
- de la température de la charge ;
- de l'erreur indiquant la divergence actuelle entre la consigne et la température mesurée de la paroi du four et
- de la variation de la température de ladite paroi mesurée dans le pas de temps donné.

D'autres caractéristiques et avantages de la présente invention ressortiront de la description faite ci-après, en référence aux dessins annexés qui en illustrent un exemple de réalisation.

Sur les dessins :
La figure 1 est un schéma par blocs représentant un système de régulation classique tel que mentionné dans le préambule de la présente description ;
La figure 2 est également un schéma par bloc illustrant le système de régulation à superviseur flou objet de la présente invention.

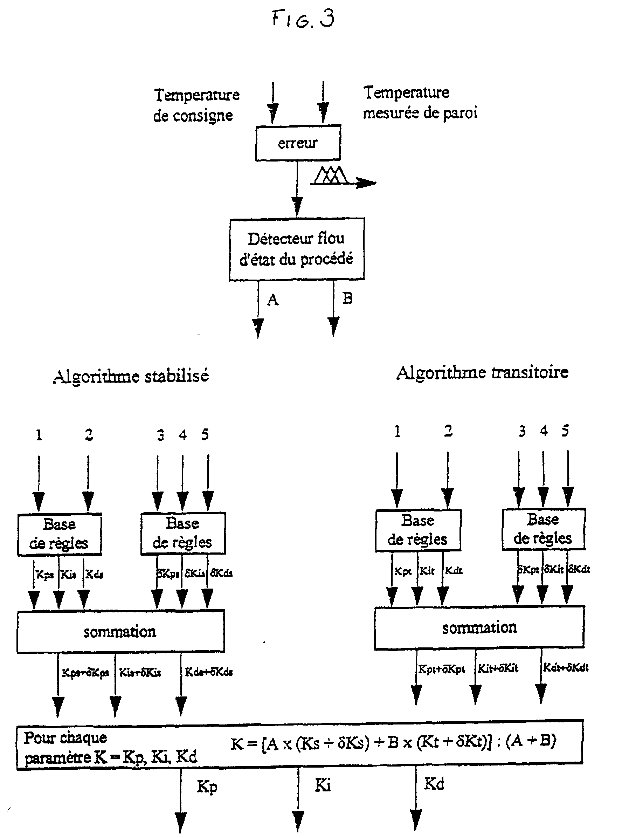

La figure 3 est un schéma qui représente l'algorithme de contrôle utilisé dans le procédé de régulation objet de la présente invention.
Les figures 4a et 4b sont des schémas représentant les courbes caractéristiques du comportement d'une zone de préchauffage durant l'état stable, respectivement sans contrôleur flou (c'est-à-dire conformément à une technique classique de régulation), et avec contrôleur flou en mettant en oeuvre le procédé de l'invention et,
Les figures 5a et 5b sont également des schémas, similaires à ceux des figures 4a et 4b illustrant les courbes caractéristiques du comportement d'une zone de chauffage durant l'état transitoire, respectivement sans contrôleur flou (c'est-à-dire selon la technique classique de régulation) et avec contrôleur flou conformément au procédé de l'invention.

Ainsi qu'on l'a précisé ci-dessus, dans le procédé de régulation objet de la présente invention, l'algorithme de contrôle comprend deux étapes :
1) Détection d'état du processus (régime transitoire ou régime stable) suivant l'écart : consigne/mesure. On prévoit deux algorithmes de contrôle : un par état et, selon l'invention, on a conçu une bascule basée sur le principe de la logique floue qui choisit l'algorithme adéquat en assurant un passage doux entre les états au lieu d'avoir une discontinuité de contrôle.
2) Calcul des paramètres du régulateur suivant la base de règles établie et affinée pour les besoins spécifiques du système considéré en prenant en compte plusieurs facteurs, notamment :
   - le taux et la cadence de production, en effet la prise en compte de la masse de produits et de la vitesse de production, permet de bien ajuster le contrôle suivant la situation instantanée régnant dans le four. Il est évident que le comportement, la réponse et la demande calorique d'une zone ne sont pas les mêmes quand le four est rempli à 100% de sa capacité et que la cadence est maximale et quand, dans le cas extrême, une zone est partiellement ou totalement vide. Le procédé de régulation selon l'invention prend en compte toute la plage des cadences admises et toute la plage de remplissage possible ;
   - la température de la charge du four ;
   - l'erreur qui indique la divergence actuelle entre la consigne et la température mesurée de paroi du four ;
   - la variation de la température de paroi du four, mesurée dans le pas de temps donné. Le contrôle de cette variable est très utile dans l'application préférée de l'invention, car le processus peut subir une séquence de changement de la consigne et, étant donné que la réponse du système est retardée (en raison de l'inertie importante du four), il n'est pas possible d'estimer l'évolution réelle du processus en observant simplement des variations d'erreur. En surveillant ces paramètres, au contraire on peut déterminer correctement le sens et la vitesse de réponse du système.

L'algorithme de contrôle utilisé dans le procédé objet de l'invention est représenté sur la figure 2. Sur cette figure :
A : Taux d'application des paramétres calculés suivant l'algorithme pour l'état stabilisé
B : Taux d'application des paramètres calculés suivant l'algorithme pour l'état transitoire
   1 : Erreur
   2 : Variation de la température de paroi
   3 : Masse du produit
   4 : Cadence de production du four
   5 : Température de la charge
      Kps, Kis, Kds : Paramètres du régulateur (facteur proportionnel, facteur d'intégration, facteur de dérivée), calculés dans la procédure stabilisée
      δKps, δKis, δKds : Facteurs de correction des paramètres du régulateur suivant le taux de production et la température de la charge.
      Kpt, Kit, Kdt, δKpt, δKit, δKdt : Paramètres du régulateur et facteurs de correction calculés dans la procédure transitoire.

Le schéma de la régulation floue mise en oeuvre par le procédé objet de l'invention est illustré sur la figure 2. En comparant ce schéma à celui de la figure 1, on voit comment le procédé de l'invention tient compte des conditions thermiques régnant dans le four et des conductions de production pour corriger, sous l'effet du superviseur flou, les paramètres délivrés au système de régulation classique.

Ainsi, selon l'invention, on obtient un algorithme de régulation qui est capable d'adapter le contrôle du four à la fois selon :
- l'état du processus : régime transitoire ou régime stable ;
- les conditions thermiques régnant dans le four : écart/consigne/mesure; température de la charge, temps de réponse du four, etc...
- les cadences de la production : taux de production, cadence de passage des produits dans le four.

La mise en oeuvre du procédé de régulation objet de la présente invention permet, en s'affranchissant des inconvénients des systèmes de régulation classiques mentionnés ci-dessus, d'augmenter les taux de production et de diminuer la consommation spécifique du four tout en améliorant la qualité du chauffage.

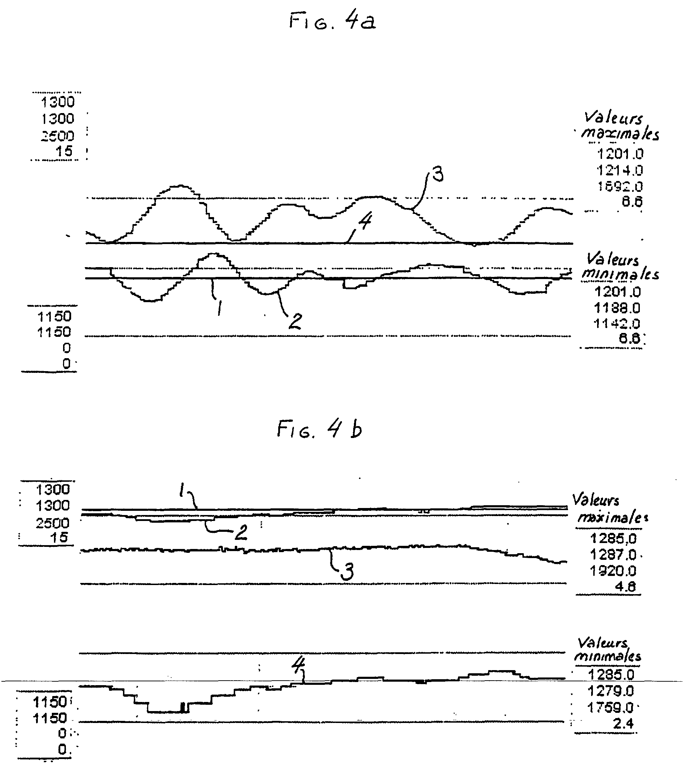

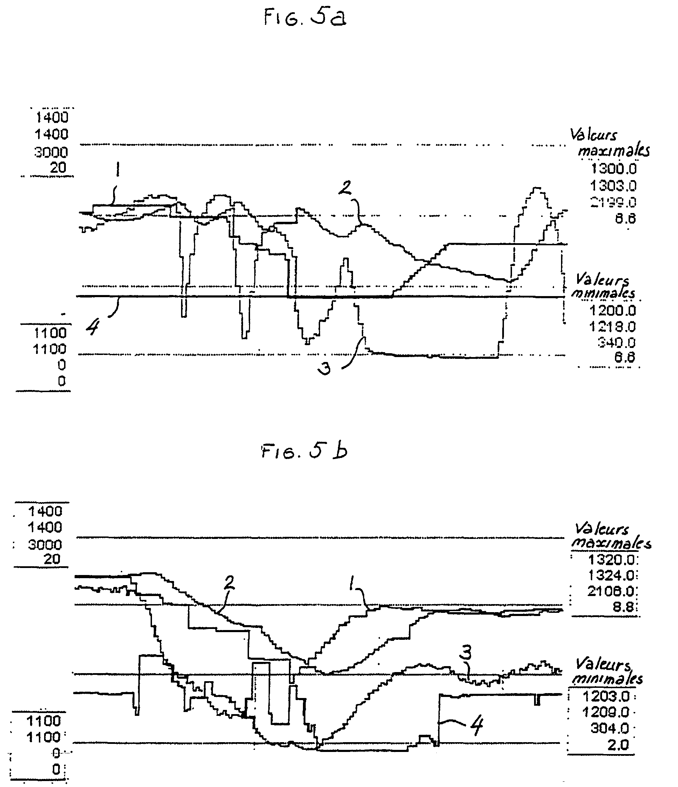

Afin d'illustrer, à titre d'exemple, les résultats apportés par le procédé objet de l'invention, on se réfère maintenant aux figures 4a, 4b et 5a, 5b.

Ces figures représentent les courbes caractéristiques du comportement des zones de préchauffage (figures 4a, 4b) et de chauffage (figures 5a, 5B) relatives à :
courbe 1 : valeur de consigne
courbe 2 : valeur mesurée
courbe 3 : débit du combustible
courbe 4 : paramètre Kp du régulateur.

Les figures 4a et 4b se réfèrent au comportement du four en régime stable : la figure 4a concernant un système de régulation classique sans superviseur flou alors que la figure 4b se réfère au système de régulation objet de l'invention avec superviseur flou.

Les figures 5a et 5b se réfèrent au comportement du four en régime transitoire : la figure 5a concernant un système de régulation classique sans superviseur flou cependant que la figure 5b se réfère au système de régulation avec superviseur flou conformément au procédé de l'invention.

L ' examen comparatif des figures 4a et 4b et 5a et 5b fait clairement ressortir les avantages apportés par l'invention comparativement à la technique classique de régulation : dans le procédé selon l'invention avec mise en oeuvre d'un superviseur flou, la courbe de la mesure suit la courbe de consigne d'une façon beaucoup plus précise, ce qui démontre bien la précision du contrôle obtenu par l'invention.

Parmi les autres avantages qui ressortent de la mise en oeuvre du procédé selon la présente invention, on peut citer notamment :
- rapidité des réactions au changement de consigne ;
- augmentation de la production du four ;
- diminution de la consommation spécifique et,
- meilleure fiabilité se traduisant par une diminution des
   interventions des opérateurs dues à des défauts de régulation.

## Revendications

1. Procédé de régulation du chauffage d'un four selon lequel un moyen classique de régulation proportionnel, intégratif, dérivatif est doté d'un superviseur flou qui, en fonction de la situation donnée et des informations qu'il reçoit sur ses entrées, adapte les paramètres du régulateur, ce procédé comportant les étapes suivantes :
- détection de l'état du processus à contrôler et à réguler comprenant une détection de régime transitoire ou de régime stable, suivant l'écart entre la température de consigne et la température mesurée de la paroi du four ;
- choix d'un des deux algorithmes de contrôle, respectivement stabilisé et transitoire en fonction de l'état du processus ainsi détecté, à l'aide d'une bascule basée sur le principe de la logique floue, en assurant un passage doux entre les états, sans discontinuité de contrôle ;
- calcul des paramètres (Kps, Kis, Kds, δKps, δKis, δKds ; Kpt, Kit, Kdt, δKpt, δKit, δKdt) du régulateur en fonction des besoins spécifiques, ce procédé étant **caractérisé en ce que** le calcul des paramètres tient compte :
- du taux de production et cadence de production (4), c'est-à-dire de la masse (3) des produits traités dans le four et de la vitesse de production ;
- de la température de la charge ;
- de l'erreur (1) indiquant la divergence actuelle entre la consigne et la température mesurée de la paroi du four et
- de la variation (2) de la température de ladite paroi mesurée dans le pas de temps donné.

## Claims

1. Process for regulating the heating of a furnace according to which a conventional proportional, integrative, derivative regulating means is provided with a fuzzy supervisor which, as a function of the given situation and information which it receives on its inputs, adapts the parameters of the regulator, said process comprising the following stages:
- detection of the state of the procedure to be controlled and regulated comprising a transient state or steady state detection, as a function of the difference between the nominal temperature and the measured temperature of the furnace wall;
- choice of one of two control algorithms, which are respectively stabilized and transient as a function of the state of the thus detected procedure, with the aid of a flip-flop based on the fuzzy logic principle, ensuring a gentle passage between the states and without any control discontinuity;
- calculation of the parameters (Kps, Kis, Kds, δKps, δKis, δKds; Kpt, Kit, Kdt, δKpt, δKit, δKdt) of the regulator as a function of specific needs, said process being **characterized in that** the calculation of the parameters takes account of:
- the production level and production rate (4), i.e. of the mass (3) of products treated in the furnace and the production speed;
- the temperature of the charge;
- the error (1) indicating the actual divergence between the nominal value and the measured temperature of the furnace wall and
- the variation (2) of the temperature of said wall measured in the given time step.

## Patentansprüche

1. Verfahren zur Regelung der Beheizung eines Ofens, in welchem eine herkömmliche proportionale, integrierende oder differenzierende Regelungseinrichtung mit einem Oberprogramm mit unscharfer Logik versehen wird, das in Abhängigkeit von der vorliegenden Situation und von Informationen, die es an seinen Eingängen erhält, die Parameter des Reglers anpasst, wobei dieses Verfahren folgende Schritte umfasst :
- Erfassen des Zustandes des zu überwachenden und zu regelnden Prozesses mit Erfassung eines Übergangszustands oder eines stabilen Zustands, entsprechend dem Unterschied zwischen der Solltemperatur und der gemessenen Ofenwand-Temperatur;
- Auswahl eines von zwei Regelalgorithmen, jeweils für stabilen und Übergangszustand in Abhängigkeit von dem so erfassten Prozesszustand, mithilfe eines Kippkreises, der auf dem Prinzip der unscharfen Logik beruht, wobei ein weicher Übergang zwischen den Zuständen ohne Diskontinuität der Regelung sichergestellt wird;
- Berechnung von Regelungsparametern (Kps, Kis, Kds, δKps, δKis, δKds; Kpt, Kit, Kdt, δKpt, δKit, δKdt), in Abhängigkeit von den spezifischen Anforderungen,
wobei dieses Verfahren **dadurch gekennzeichnet ist, dass** die Parameter-Berechnung berücksichtigt:
- den Produktionsausstoß und -takt (4), d. h. die Masse (3) der in dem Ofen behandelten Produkte und die Produktionsgeschwindigkeit;
- die Chargentemperatur;
- den Fehler (1), der den momentanen Unterschied zwischen der Solltemperatur und der gemessenen Ofenwand-Temperatur angibt;
- die Veränderung (2) der mit der gegebenen Zeitschrittweite gemessenen Temperatur dieser Wand.
